# EUROPEAN PATENT SPECIFICATION

(11) **EP 3 975 730 B1**
(45) Date of publication and mention of the grant of the patent: **11.09.2024**
(21) Application number: 20725570.4
(22) Date of filing: 19.05.2020
(51) Int. Cl.: A23C 11/10, A23L 2/38, A23P 10/40, A23L 19/00, A23L 25/00

(54) **PROCESS FOR PRODUCTION OF COCONUT MILK POWDER**
VERFAHREN ZUR HERSTELLUNG VON KOKOSNUSSMILCHPULVER
PROCÉDÉ POUR LA PRODUCTION DU POUDRE DE LAIT DE NOIX DE COCO

(30) Priority: 27.05.2019 EP 19176774
(43) Date of publication of application: 06.04.2022
(73) Proprietor: Société des Produits Nestlé S.A., 1800 Vevey (CH)
(72) Inventor: HABEYCH NARVAEZ, Edwin Alberto, 1010 Lausanne (CH); GALAFFU, Nicola, 1210 Ornex (FR); CHUAT, Jean-Yves, 1805 Jongny (CH); GADDIPATI, Sanyasi, Beachwood, Ohio 44122 (US)
(74) Representative: Dinger, Hansjörg
(86) International application number: PCT/EP2020/063895
(87) International publication number: WO 2020/239521

(56) References cited:
- CN-A- 102 696 989
- ANONYMOUS: "Bio-Kokosmilchpulver: Kokospulver ohne Zucker | Tropicai", 2 March 2019 (2019-03-02), pages 1 - 6, XP055607061, Retrieved from the Internet <URL:http://web.archive.org/web/20190302174953/https://www.tropicai.com/produkt/bio-kokosmilchpulver/> [retrieved on 20190718]
- NATURKOSTBAR AG: "Coconut milk powder | Naturkostbar", 18 July 2018 (2018-07-18), pages 1 - 4, XP055607070, Retrieved from the Internet <URL:https://naturkostbar.ch/en/shop/products/kokosmilchpulver/#.XTCAZWeHMYs> [retrieved on 20190718]
- DATABASE GNPD [online] MINTEL; 29 April 2019 (2019-04-29), ANONYMOUS: "Organic Coconut Milk Powder", XP055607080, retrieved from www.gnpd.com Database accession no. 6503341
- N. S. ZAFISAH ET AL: "Processing of raw coconut milk for its value addition using spray and freeze drying techniques", JOURNAL OF FOOD PROCESS ENGINEERING, vol. 41, no. 1, 1 February 2018 (2018-02-01), US, pages e12602, XP055607245, ISSN: 0145-8876, DOI: 10.1111/jfpe.12602
- AUDIRENE AMORIM SANTANA ET AL: "Spray drying of babassu coconut milk using different carrier agents", DRYING TECHNOLOGY., vol. 35, no. 1, 30 March 2016 (2016-03-30), US, pages 76 - 87, XP055607099, ISSN: 0737-3937, DOI: 10.1080/07373937.2016.1160111

## Description

The present invention relates to a process for making a coconut milk powder.

Powdered coconut milk is used today practically worldwide in the preparation of Asian or Asian-like food dishes. Natural coconut milk comprises a lot of coconut fat and sugars, which makes it difficult to industrially process and dry, particularly to spray dry, it into a dry, smooth and non-sticking powder. So typically, coconut milk has about 15-55% fat content. For rendering coconut milk more spray-dryable, several solutions have been proposed, some of which are presently used industrially. For example, GB 1'144'256 describes the use and addition of specifically selected emulsifiers to coconut milk in order to facilitate spray drying. CN107348413 describes the use of casein protein, maltodextrin and sodium citrate for facilitating spray drying. CN102696989 disclose a manufacturing method of coconut powder, wherein modified starch or maltodextrin is added.

Modern consumers, however, are becoming more and more conscious and concerned about the nature of ingredients they find in so-called 'natural' but processed food products, and which they would *a priori* not expect to be present in such natural food products. Hence, modern consumers are more and more averse to artificial ingredients such as artificial emulsiers and maltodextrin, and other ingredients not familiar to them.

Hence, there is a clear need in the art and industry to find alternatives and better solutions for spray drying coconut milk rich in fat and sugars, particularly for reducing the use of unauthentic emulsiers and maltodextrin.

The object of the present invention is to improve the state of the art and to provide an improved solution to overcome at least some of the inconveniences described above.

The object of the present invention is to provide a solution for making a natural, consumer-friendly coconut milk powder, wherein the milk powder does not contain artificial or unauthentic ingredients or only minimal amounts of such ingredients.

Particularly, the object of the present invention is to provide a solution for making a natural coconut milk powder, wherein the milk powder does not contain maltodextrin.

A further object of the present invention is to provide a solution for making a natural coconut milk powder, where the coconut milk powder only comprises ingredients, which derive and originate directly from coconut.

A still further object of the present invention is to make such a natural coconut milk powder by spray drying.

The object of the present invention is achieved by the subject matter of the independent claims. The dependent claims further develop the idea of the present invention.

Accordingly, the present invention provides in a first aspect a process for making the coconut milk powder of the invention, comprising the steps of:
- heating the coconut milk to a temperature from 55°C to 90°C to obtain a homogenous solution;
- adding the coconut flour and optionally water to the homogenous coconut milk solution;
- mixing the composition comprising the coconut flour, coconut milk and optionally water into an aqueous slurry;
- drying the aqueous slurry into a powder;
wherein the amount of coconut milk in the aqueous slurry is from 80-95% (in wet weight) and the amount of coconut flour is from 5-12% (in wet weight) and wherein the drying is spray drying and wherein the powder does not comprise maltodextrin or starch and wherein the milk powder has a coconut fat content from 10-75 wt%.

The inventors surprisingly found that coconut milk can easily be spray dried, if the maltodextrin, as carrier for the spray drying and as suggested by CN107348413 (A), is replaced by coconut flour. In fact, they even found that when replacing maltodextrin with coconut flour, also the amount of casein protein added in the prior art to coconut milk can be reduced or even omitted completely. Therefore, it now becomes possible to produce a spray dried coconut milk powder, which mainly or only comprises coconut milk and coconut flour; i.e. a spray dried coconut milk powder comprising mainly or only natural ingredients directly originating from coconut. The inventors believe that this is the first all-natural coconut milk powder, which can be produced by industrial spray drying and still has a high-fat content. Evidence for the working of the present invention is provided further below in the Experimental section.

### Detailed Description of the invention

The term 'coconut milk' refers to the liquid that comes from a grated pulp of a mature coconut. Coconut milk is a traditional food ingredient consumed mostly in South and Southeast Asia, the Caribbean and South America. Coconut milk typically has about 15-40 wt% (weight per-cent) fat, 1-5 wt% (weight per-cent) proteins, and zero to a neglect-able amount of insoluble fibers.

The term 'coconut flour' refers to the soft flour made from the coconut pulp left-over after the production of coconut milk. It is the protein- and fibre-rich by-product of the coconut milk production. Typically, coconut flour is dried and in powder form. Coconut flour is gluten-free and it is free from wheat and other grains. Typically, coconut flour has about 5-25 wt% (weight per-cent) fat, 5-20 wt% (weight per-cent) proteins, 15-50 wt% (weight per-cent) insoluble fibres, and a moisture content of up to 10 wt% (weight per-cent).

The term 'coconut milk powder' refers herein to a dry, free-flowing powder, having a moisture content of below 10 wt%, preferably below 5 wt% or 3 wt%, more preferably of below 2 wt% or even below 1 wt% (weight per-cent).

In one embodiment, the coconut milk powder of the present invention comprises at least 90 wt% (weight per-cent) of a combination of coconut milk and coconut flour. Preferably, the coconut milk powder comprises at least 95 wt% (weight per-cent) of a combination of coconut milk and coconut flour. Even more preferably, the coconut milk powder consists only of coconut milk and coconut flour. Alternatively, the coconut milk powder of the present invention comprises at least 90 wt% (weight per-cent) ingredients directly originating from coconut, preferably at least 95 wt% (weight per-cent) ingredients directly originating from coconut, and more preferably even consists of only ingredients directly originating from coconut.

The advantage of the present invention is that the coconut milk powder of the present invention only comprises minimal amounts to no amounts of ingredients, which are not naturally present and derived from coconut. Hence, a coconut milk powder can be produced which has very little or no artificial or unauthentic emulsifiers, thickeners and/or spray dry carrier materials such as maltodextrin and/or starch, as for example denatured or modified starch. Hence, a coconut milk powder can now be produced which is `clean label', i.e. without the addition of any coconut foreign ingredients, and which is 'all natural' and therefore much more appreciated by the modern consumer.

The coconut milk powder of the present invention is a spraydried powder. There is an industrial advantage of drying large quantities of an aqueous food composition by spray drying as it allows drying of very large quantities of materials at large scale and under acceptable economic conditions. So far, spray drying of high-fat containing aqueous food compositions such as coconut milks was difficult and the use of maltodextrin or starch as a carrier for the spray drying was considered necessary. However, the present inventors have found that maltodextrin or starch can be entirely replaced by coconut flour, which allows to readily spray-dry high-fat containing liquids such as coconut milks.

In one embodiment, the present coconut milk powder of the present invention does not contain maltodextrin or starch.

The coconut milk powder of the present invention has a coconut fat content from 10-75 wt%, preferably from 20-55 wt%, more preferably from 25-45 wt% or from 35-50 wt% (weight per-cent).

In one further embodiment of the present invention, the coconut milk powder has a coconut protein content of at least 1.5 wt%, preferably of at least 2.0 wt%, 2.5 wt%, or more preferably of at least 3.0 wt% or 3.5 wt% (weight per-cent). In one still further embodiment of the present invention, the coconut milk powder has a coconut insoluble fibre content from 1 to 10 wt%, preferably from 1.5 to 7 wt%, or more preferably from 1.7 to 5.5 or to 5.0 wt% (weight per-cent).

"Coconut insoluble fibres" are defined herein as fibres which are originating from coconut and which are insoluble in water or in an aqueous solution.

In one embodiment of the process of the present invention, the step of "mixing the composition comprising the coconut flour, coconut milk and optionally water into an aqueous slurry" is for at least 5 minutes in a mixer, preferably for at least 10 minutes in a mixer. This allows good mixing of all the ingredients into a homogenous aqueous slurry.

Preferably, the "mixing the composition comprising the coconut flour, coconut milk and optionally water into an aqueous slurry" is done at a temperature between 55°C and 90°C. At those temperatures, the coconut fat present in the coconut milk and flour is melted and consequently good mixing is improved.

Drying the aqueous slurry into a powder is by spray drying. As indicated earlier, spray drying is a preferred drying process when it comes to drying large industrial quantities of an aqueous slurry into a powder in an economic way.

Preferably, spray drying is done at a temperature from 110°C to 180°C. This allows on one hand to efficiently dry the slurry into a powder, and on the other hand not to overheat the composition in order to prevent or minimize burning and other deteriorating effects such as undesired Maillard reactions.

In one embodiment, the present invention relates to a process, wherein the process of the present invention further comprises a step of milling the coconut flour before drying the aqueous slurry into a powder. It has been observed by the inventors that milling the coconut flour has an advantage of modifying the viscosity of the final aqueous slurry before the drying step and to thereby improve the spray drying process. Milling the coconut flour can be done either before or after adding said coconut flour to the coconut milk solution.

Preferably, the coconut flour consists of particles, at least 99% of which are no greater than 200 µm in size, preferably no greater than 100 µm in size, even more preferably no greater than 50 µm or 40 µm in size. More preferably, at least 99.9% of the coconut flour particles are no greater than 200 µm in size, preferably no greater than 100 µm in size, even more preferably no greater than 40 µm in size. The smaller the particles of the coconut flour in the final coconut milk powder, the less the consumer will detect those particles in his mouth upon consumption; I.e. the smoother and better the mouth feel of a reconstituted coconut milk powder will be upon consumption. For measuring the particle sizes of the coconut flour, the resulting dried powders after the spray drying can be suspended in water and the particle size distribution of the flour determined by using a Mastersizer 3000 from Malvern. In a preferred embodiment, the aqueous slurry comprising the coconut flour, coconut milk and optionally water has a particle size distribution D50 (v, 0.5) of 200 µm or below, preferably of 150 or 100 µm or below, more preferably of 50, 45, 40 or 35 µm or below. Even more preferably, the particle size distribution D50 (v, 0.5) is 30 µm or below.

In the present process, the amount of coconut milk in the aqueous slurry is from 80-95% (in wet weight per-cent) and the amount of coconut flour is from 5-12% (in wet weight per-cent). Preferably, the amount of coconut milk is from 85-95% (in wet weight per-cent) and the amount of coconut flour is from 5-12% (in wet weight per-cent). More preferably, the amount of coconut milk is from 88-95% (in wet weight per-cent) and the amount of coconut flour is from 5-12% (in wet weight per-cent).

In one embodiment, the total solid content of the aqueous coconut milk-flour slurry is from 25 to 45% (dry weight/wet weight), preferably from 30 to 42% or from 35 to 40% (dry weight/wet weight).

In one embodiment, the process of the present invention does not comprise a step of hydrolysing the coconut milk or coconut flour, or partly hydrolysing the coconut milk or coconut flour. Particularly, the process of the present invention does preferably not comprise a step, wherein the coconut milk or coconut flour is treated by an enzyme or an acid for the purpose of hydrolysing for example proteins or fibres present in the coconut milk and coconut flour. Preferably, the process of the present invention does not comprise a step of treating the coconut milk and/or coconut flour with an enzyme. Omission of these process steps prevents a degradation or a reduction of the naturally present proteins and fibres from the coconut milk and flour in the final coconut milk powder product. Thereby, the final coconut milk powder has a better nutritional profile when compared to a corresponding product which underwent partial or complete hydrolysis. Furthermore, a non-hydrolysis of the proteins and/or insoluble fibres provides an aqueous slurry in the present process, which can be better industrially dried by spray drying, particularly when no carrier material such as maltodextrin or starch is added.

Further advantages and features of the present invention are apparent from the figures and examples.

### Example 1: Mixing and Spray drying

Low fat (17% fat) and high fat (33% fat) coconut milks were obtained from Raps (Germany) and from the Kurunegala factory (Sri Lanka), respectively. Coconut milk was heated to a temperature between 55°C and 90°C to recover a homogenous solution. Once the fat was melted, coconut flour was added at concentrations from 5 wt% to 12 wt% of the total mixture. Coconut flours were sourced from Cocofina (United Kingdom), from Danlee (France), and by directly pressing from virgin coconut oil extraction (Sri Lanka). The resulting slurry, where up to 0.5 wt% water was added, was mixed with a high speed mixer for 10 minutes. The Total Solid (TS) content of the final slurry was preferably between 37% and 40% (dry weight/wet weight). The slurry was kept at a temperature of 75°C for 10 minutes under agitation in standard tank, before it was spray dried at 130°C in a pilot scale spray dryer with a bi-fluid nozzle or a rotative disc.

### Example 2: Trial 1 with 10% Cocofina coconut flour

Low fat coconut milk was first heated at 55°C to obtain a homogeneous solution. Subsequently, Na-caseinate, TriNa phosphate and coconut flour were incorporated with the help of a polytron mixer. The resulting slurry was heat treated at 75°C for 30 minutes. Total Solid content (TS) of the mixture was 40%. The final composition is presented in Table 1 below.

**Table 1: Recipe of Trial 1 coconut milk-flour slurry**

| **Ingredient** | **Wet wt%** | **Weight (g)** |
|---|---|---|
| Coconut milk (17% fat) | 86.2 | 1724.0 |
| Coconut flour (5% fat) | 10.0 | 200.0 |
| Water | 0.5 | 10.0 |
| Na Caseinate | 3.2 | 64.0 |
| TriNa Phosphate | 0.1 | 2.0 |
| **Total** | **100.0** | **2000.0** |

Half of the slurry described above was pumped at 60°C with a rate of 80 Kg/h towards a spray dry tower type MOBILE MINO (GEA, Denmark) equipped with bi-fluid nozzle. Inner temperature of the tower was set to 130°C. The other half of the slurry was vacuum dried in a vacuum oven type Heraeus T6130P set at 0.1 mbar and 50°C overnight. The resulting coconut milk powder from the spray drying was white and free flowing without caking. The fat content of the powder was about 37 wt%.

### Example 3: Trial 2 with 10% Danlee coconut flour

For this trial the coconut milk-flour slurry was prepared as described in Example 2, but where cocofina coconut flour (5% fat) was replaced with Danlee coconut flour (12.6% fat). The resulting slurry was heat treated at 75°C for 30 minutes. Total Solid content (TS) of the mixture was 37%. The final composition is the same as in Example 2 and as presented in Table 1, except for the different sourced coconut flour.

Spray drying was done in the same way as in Example 2. However, spray drying with the use of a bi-fluid nozzle was difficult and more easily done with the use of a rotative disc. The resulting coconut milk powder was white and free flowing without caking. The fat content of the powder was about 39 wt%.

### Example 4: Trial 3 with 10% Danlee coconut flour, without Na caseintate and TriNa phosphate

For this trial 3 the coconut milk-flour slurry was prepared in the same way as in the Examples 2 and 3, but with the ingredients as listed in Table 2. Danlee coconut flour (12.6% fat) was used, Na caseinate and TriNa phosphate were omitted from the ingredients list. The resulting slurry was heat treated at 75°C for 30 minutes. Total Solid content (TS) of the mixture was 37%.

**Table 2: Recipe of Trial 3 coconut milk-flour slurry**

| **Ingredient** | **Wet wt%** | **Weight (g)** |
|---|---|---|
| Coconut milk (17% fat) | 87.5 | 1750.0 |
| Coconut flour (12.6% fat) | 12.0 | 240.0 |
| Water | 0.5 | 10.0 |
| **Total** | **100.0** | **2000.0** |

It was observed that the Danlee coconut flour had a somewhat bigger swelling capacity than the Cocofina coconut flour when suspended in coconut milk. Spray dry was done with a rotative disc in a spray dryer type MOBILE MINOR (GEA, Denmark). The resulting coconut milk powder was white and free flowing without caking. The fat content of the powder was about 44 wt%.

### Example 5: Trial 4 with 10% Cocofina coconut flour, without Na caseintate and TriNa phosphate, and milling of the flour

Coconut milk was first heated to 55°C to melt the coconut fat and to obtain a homogeneous solution. In a first step, 5 wt% of Cocofina coconut flour was added to the coconut milk and mixed in an Ystral mixer at 50°C for 10 minutes. The aqueous slurry was transferred to a Fryma MZ80-A bead mill and milled at 11Kg/h with a speed of 1'500 rpm. In a second step, another 5 wt% of Cocofina coconut flour was added to the slurry to obtain a final concentration of coconut flour of 10%. The aqueous slurry was then transferred again to a Fryma MZ80-A bead mill and milled a second time at 11Kg/h with a speed of 1'500 rpm. A third milling was then performed in the same mill at 21kg/h with a speed of 2'700 rpm. Thereafter, the slurry was homogenized in a Niro Soavi homogenizer (300/120 bars) and further pasteurized in a Meilibex tank (75 °C/ 30 mins) before spray drying. Total Solid (TS) content of the mixture was determined as 37.5%. The total recipe of the coconut milk-flour slurry is shown in Table 3. After cooling to 60°C, part of the slurry was spray dried in a Niro at 160°C with a bi-fluid nozzle and the other part on the same spray dryer but with a rotative disc. The resulting coconut milk powders were white and free flowing without caking. The fat content of the powder was about 42 wt%.

**Table 3: Recipe of Trial 4 coconut milk-flour slurry**

| **Ingredient** | **Wet wt%** | **Weight (g)** |
|---|---|---|
| Coconut milk (17% fat) | 89.5 | 1790.0 |
| Coconut flour (5 wt% fat) | 10.0 | 200.0 |
| Water | 0.5 | 10.0 |
| **Total** | **100.0** | **2000.0** |

### Example 6: Trial 5 with high fat coconut milk, 10% Cocofina coconut flour and milling of the slurry

For this trial 5 the coconut milk-flour slurry was prepared in the same way as in the Example 5, but with the ingredients as listed in Table 4. High fat coconut milk (33 wt%) from Sri Lanka and Cocofina coconut flour (5 wt% fat) were used. The coconut milk-flour slurry was heated at 55°C for 10 minutes followed by smoothening of the slurry with the use of a wet-ball mill type Alpine Hydro-Mill 90 AHM operating at 10 Kg/h, 3000 rpm, and 50°<T<60°C, using zirconium oxide beads. The resulting slurry was homogenized in a Niro Soavi homogenizer (300/120 bars) and further pasteurized in a Meilibex tank (75 °C/ 5 mins) before spray drying in a MOBILE MINOR (GEA, Denmark) at T=160 °C. The total Solid content (TS) of the mixture was between 45 and 60%.

**Table 4: Recipe of Trial 5 coconut milk-flour slurry**

| **Ingredient** | **Wet wt%** | **Weight (g)** |
|---|---|---|
| Coconut milk (33% fat) | 84.5 | 1690.0 |
| Coconut flour (5% fat) | 10.0 | 200.0 |
| Water | 0.5 | 10.0 |
| Na Caseinate | 5.0 | 100.0 |
| **Total** | **100.0** | **2000.0** |

### Example 7: Trial 6 with high fat coconut milk, 10% coconut flour from Virgin oil extraction and milling of the slurry

For this trial 6, the coconut milk-flour slurry was prepared in the same way as in the Example 5, but with the ingredients as listed in Table 5. Both high fat coconut milk (33 wt%) and coconut flour from Virgin oil extraction (8 wt% fat) sourced from Sri Lanka were used. Na caseinate was also used as an ingredient.

**Table 5: Recipe of Trial 6 coconut milk-flour slurry**

| **Ingredient** | **Wet wt%** | **Weight (g)** |
|---|---|---|
| Coconut milk (33% fat) | 85 | 1700.0 |
| Coconut flour (8% fat) | 10.0 | 200.0 |
| Na Caseinate | 5 | 10.0 |
| **Total** | **100.0** | **2000.0** |

Coconut flour with 8% residual fat and initial partial size of D50 (v, 0.5) 180 (pm) was used in the trial. The slurry of coconut milk and coconut flour milled in wet to reduce the particle size and achieve narrow practical size distribution. The particle size reduction will help to have efficient spray drying process and reduce graininess in the mouth when used in the final application.

The coconut milk-flour slurry was heated at 55°C for 10 minutes followed by smoothening of the slurry with the use of a wet-ball mill type Alpine Hydro-Mill 90 AHM operating at 10 Kg/h, 3000 rpm, and 50°<T<60°C, using zirconium oxide beads. To have an effective and homogeneous particle size distribution the slurry was subject to several cycles of passage through the grinding chamber in the bead mill. Samples of un-milled initial slurry and at each passage were collected and analysed to measure the particle size distribution. Typically the particle size of around D (v, 0.5) 30 (pm) or lower was achieved after three passages; the particle size was characterized by laser diffraction using the Malvern Mastersizer 2000 in water.

The resulting slurry with reduced particle size was homogenized in a Niro Soavi homogenizer (300/120 bars) and further pasteurized in a Meilibex tank (75 °C/ 5 mins) before spray drying in a MOBILE MINOR (GEA, Denmark) at T=160 °C.

The results showed that the coconut flour from Virgin oil extraction with 8 wt% residual fat had a particle size distribution D50 (v, 0.5) of ca. 180 µm before milling; the coconut flour and coconut milk slurry before bead milling had a particle size distribution D50 (v, 0.5) of ca. 160 µm. After the first milling pass, the coconut flour and coconut milk slurry had a particle size distribution D50 (v, 0.5) of ca. 40 µm, and after the 2^{nd} pass of ca. 35 µm. After the 3^{rd} pass, the coconut flour and coconut milk slurry had a particle size distribution D50 (v, 0.5) of ca. 30 µm.

The particle size of the coconut flour in the slurry of below ca. 50 µm, preferably of below 35 µm, before spray drying is a preferred parameter. This reduced particle size can be achieved either by dry or by wet bead milling of coconut flour and added to the coconut milk prior to homogenisation and spray drying. Fine particle size will have an impact on the spray drying during processing, on the colour of the final coconut milk powder after spray drying and the mouth feel after preparation of the final recipe by the consumer.

## Claims

1. A process for making a coconut milk powder comprising coconut milk and coconut flour, the process comprising the steps of:
- heating the coconut milk to a temperature from 55°C to 90°C to obtain a homogenous solution;
- adding the coconut flour and optionally water to the homogenous coconut milk solution;
- mixing the composition comprising the coconut flour, coconut milk and optionally water into an aqueous slurry;
- drying the aqueous slurry into a powder;
wherein the amount of coconut milk in the aqueous slurry is from 80-95% (in wet weight) and the amount of coconut flour is from 5-12% (in wet weight) and wherein the drying is spray drying and wherein the powder does not comprise maltodextrin or starch and wherein the milk powder has a coconut fat content from 10-75 wt%.

2. The process according to claim 1, wherein mixing the composition comprising the coconut flour, coconut milk and optionally water into an aqueous slurry is done at a temperature between 55°C and 90°C.

3. The process according to any one of the claims 1 to 2, wherein the process comprises a step of milling the coconut flour before drying the aqueous slurry into a powder.

4. The process according to any one of claims 1 to 3, wherein the total solid content of the slurry is from 25 to 60% (dry weight/wet weight), preferably from 35 to 45% (dry weight/wet weight).

5. The process according to any one of the claims 1 to 4, wherein the process does not comprise a step of treating the coconut milk or coconut flour with an enzyme.

6. The process according to any one of the claims 1 to 5, wherein the milk powder has a coconut fat content from 20-55 wt%, more preferably from 30-45 wt%.

7. The process according to any one of the claims 1 to 6, wherein the powder has an insoluble coconut fibre content from 1 to 10 wt%, preferably from 1.5 to 7 wt%.

8. The process according to any one of the claims 1 to 7, wherein the coconut flour consists of particles, at least 99% of which are no greater than 200 µm in size, preferably no greater than 100 µm in size, even more preferably no greater than 50 µm or 40 µm in size.

9. The process according to any one of the claims 1 to 8, wherein the aqueous slurry comprising the coconut flour, coconut milk and optionally water has a particle size distribution D50 (v, 0.5) of 200 µm or below, preferably of 150 or 100 µm or below, more preferably of 50, 45, 40 or 35 µm or below.

10. The process according to any one of the claims 1 to 9, wherein the coconut milk powder comprising at least 90 wt% of a combination of coconut milk and coconut flour.

## Patentansprüche

1. Verfahren zum Herstellen eines Kokosmilchpulvers, umfassend Kokosmilch und Kokosmehl, das Verfahren umfassend die Schritte:
- Erhitzen der Kokosmilch auf eine Temperatur von 55 °C bis 90 °C, um eine homogene Lösung zu erhalten;
- Hinzufügen des Kokosmehls und optional Wassers zu der homogenen Kokosmilchlösung;
- Vermischen der Zusammensetzung, umfassend das Kokosmehl, die Kokosmilch und optional Wasser zu einer wässrigen Mischung;
- Trocknen der wässrigen Mischung zu einem Pulver;
wobei die Menge an Kokosmilch in der wässrigen Mischung von 80-95 % (in Nassgewicht) und die Menge an Kokosmehl von 5-12 % (in Nassgewicht) beträgt und wobei das Trocknen ein Sprühtrocknen ist und wobei das Pulver kein Maltodextrin oder keine Stärke umfasst und wobei das Milchpulver einen Kokosfettgehalt von 10-75 Gew.-% aufweist.

2. Verfahren nach Anspruch 1, wobei das Vermischen der Zusammensetzung, umfassend das Kokosmehl, die Kokosmilch und optional Wasser, zu einer wässrigen Mischung bei einer Temperatur zwischen 55 °C und 90 °C erfolgt.

3. Verfahren nach einem der Ansprüche 1 bis 2, wobei das Verfahren einen Schritt eines Mahlens des Kokosnussmehls vor dem Trocknen der wässrigen Mischung zu einem Pulver umfasst.

4. Verfahren nach einem der Ansprüche 1 bis 3, wobei der Gesamtfeststoffgehalt der Mischung von 25 bis 60 % (Trockengewicht/Nassgewicht), vorzugsweise von 35 bis 45 % (Trockengewicht/Nassgewicht) beträgt.

5. Verfahren nach einem der Ansprüche 1 bis 4, wobei das Verfahren keinen Schritt eines Behandelns der Kokosmilch oder des Kokosmehls mit einem Enzym umfasst.

6. Verfahren nach einem der Ansprüche 1 bis 5, wobei das Milchpulver einen Kokosfettgehalt von 20-55 Gew.-%, vorzugsweise von 30-45 Gew.-% aufweist.

7. Verfahren nach einem der Ansprüche 1 bis 6, wobei das Pulver einen Gehalt an unlöslichen Kokosfasern von 1 bis 10 Gew.-%, vorzugsweise von 1,5 bis 7 Gew.-% aufweist.

8. Verfahren nach einem der Ansprüche 1 bis 7, wobei das Kokosmehl aus Partikeln besteht, wobei mindestens 99 % von diesen nicht mehr als 200 µm, vorzugsweise nicht mehr als 100 µm groß, und noch mehr bevorzugt nicht mehr als 50 µm oder 40 µm groß sind.

9. Verfahren nach einem der Ansprüche 1 bis 8, wobei die wässrige Mischung, umfassend das Kokosmehl, die Kokosmilch und optional Wasser, eine Partikelgrößenverteilung D50 (v, 0,5) von 200 µm oder weniger, vorzugsweise von 150 oder 100 µm oder weniger, mehr bevorzugt von 50, 45, 40 oder 35 µm oder weniger aufweist.

10. Verfahren nach einem der Ansprüche 1 bis 9, wobei das Kokosmilchpulver mindestens 90 Gew.-% einer Kombination aus Kokosmilch und Kokosmehl umfasst.

## Revendications

1. Procédé de fabrication d'une poudre de lait de coco comprenant du lait de coco et de la farine de coco, le procédé comprenant les étapes consistant à :
- chauffer le lait de coco à une température comprise entre 55 °C et 90 °C pour obtenir une solution homogène ;
- ajouter la farine de coco et éventuellement de l'eau à la solution homogène de lait de coco ;
- mélanger la composition comprenant la farine de coco, le lait de coco et éventuellement l'eau pour obtenir une suspension aqueuse ;
- sécher la suspension aqueuse en une poudre ;
dans lequel la quantité de lait de coco dans la suspension aqueuse est comprise entre 80 et 95 % (en poids humide) et la quantité de farine de coco est comprise entre 5 et 12 % (en poids humide) et dans lequel le séchage est effectué par atomisation et dans lequel la poudre ne comprend pas de maltodextrine ou d'amidon et dans lequel la poudre de lait a une teneur en graisse de coco comprise entre 10 et 75 % en poids.

2. Procédé selon la revendication 1, dans lequel le mélange de la composition comprenant la farine de coco, le lait de coco et éventuellement l'eau en une suspension aqueuse est effectué à une température comprise entre 55 °C et 90 °C.

3. Procédé selon l'une quelconque des revendications 1 à 2, dans lequel le procédé comprend une étape consistant à broyer la farine de coco avant de sécher la suspension aqueuse en une poudre.

4. Procédé selon l'une quelconque des revendications 1 à 3, dans lequel la teneur totale en solides de la suspension est comprise entre 25 et 60 % (poids sec/poids humide), de préférence entre 35 et 45 % (poids sec/poids humide).

5. Procédé selon l'une quelconque des revendications 1 à 4, dans lequel le procédé ne comprend pas d'étape consistant à traiter le lait de coco ou la farine de coco avec une enzyme.

6. Procédé selon l'une quelconque des revendications 1 à 5, dans lequel la poudre de lait a une teneur en graisse de coco de 20 à 55 % en poids, plus préférablement de 30 à 45 % en poids.

7. Procédé selon l'une quelconque des revendications 1 à 6, dans lequel la poudre a une teneur en fibres de coco insolubles de 1 à 10 % en poids, de préférence de 1,5 à 7 % en poids.

8. Procédé selon l'une quelconque des revendications 1 à 7, dans lequel la farine de coco est constituée de particules dont au moins 99 % ont une taille inférieure ou égale à 200 µm, de préférence une taille inférieure ou égale à 100 µm, encore plus préférablement une taille inférieure ou égale à 50 µm ou 40 µm.

9. Procédé selon l'une quelconque des revendications 1 à 8, dans lequel la suspension aqueuse comprenant la farine de coco, le lait de coco et éventuellement l'eau présente une distribution granulométrique D50 (v, 0,5) égale ou inférieure à 200 µm, de préférence égale ou inférieure à 150 ou 100 µm, plus préférablement égale ou inférieure à 50, 45, 40 ou 35 µm.

10. Procédé selon l'une quelconque des revendications 1 à 9, dans lequel la poudre de lait de coco comprend au moins 90 % en poids d'une combinaison de lait de coco et de farine de coco.
